# EUROPÄISCHE PATENTSCHRIFT

(11) **EP 3 749 250 B1**
(45) Veröffentlichungstag und Bekanntmachung des Hinweises auf die Patenterteilung: **04.10.2023**
(21) Anmeldenummer: 19705299.6
(22) Anmeldetag: 06.02.2019
(51) Int. Cl.: A61C 8/00, A61C 13/00

(54) **IMPLANTAT MIT RADIAL ERWEITERTEM PFOSTEN AN TRÄGERSTRUKTUR, WEICHGEWEBEVERDRÄNGUNGSSYSTEM, FERTIGUNGSVERFAHREN UND PLANUNGSVERFAHREN ZUM FERTIGEN EINES IMPLANTATS**
IMPLANT COMPRISING A RADIALLY ENLARGED POST ON THE SUPPORT STRUCTURE, SOFT TISSUE DISPLACEMENT SYSTEM, MANUFACTURING PROCESS AND PLANNING PROCESS FOR MANUFACTURING AN IMPLANT
IMPLANT À JAMBAGES ÉLARGIS RADIALEMENT AU NIVEAU D'UNE STRUCTURE PORTEUSE, SYSTÈME DE DÉPLACEMENT DE TISSU MOU, PROCÉDÉ DE PRÉPARATION ET PROCÉDÉ DE PLANIFICATION DESTINÉ À PRÉPARER UN IMPLANT

(30) Priorität: 06.02.2018 DE 102018102568
(43) Veröffentlichungstag der Anmeldung: 16.12.2020
(73) Patentinhaber: Karl Leibinger Medizintechnik GmbH & Co. KG, 78570 Mühlheim (DE)
(72) Erfinder: GELLRICH, Nils-Claudius, Prof. Dr., 78570 Mühlheim (DE); RAHLF, Björn, Dr., 78570 Mühlheim (DE); REINAUER, Frank, 78570 Mühlheim (DE)
(74) Vertreter: Winter, Brandl - Partnerschaft mbB
(86) Internationale Anmeldenummer: PCT/EP2019/052936
(87) Internationale Veröffentlichungsnummer: WO 2019/154873

(56) Entgegenhaltungen:
- WO-A1-00/06044
- WO-A1-02/074181
- WO-A1-2015/001137
- WO-A1-2016/198935
- WO-A1-2017/021010
- WO-A1-2017/072066
- WO-A1-2019/081059
- DE-A1- 10 305 887
- DE-B3-102015 122 800
- GB-A- 2 010 095
- US-A- 5 433 607

## Beschreibung

Die Erfindung betrifft ein Implantat mit einer Trägerstruktur, die zum knochenkonturfolgenden / angepassten Verankern an einem Kiefer- und/oder Schädelknochen vorbereitet ist, wobei von der Trägerstruktur wenigstens ein integral / einteilig / einmaterialig / einstückig angebrachter, vorzugsweise über einen Radius in die Trägerstruktur übergehender, Pfosten / Sockel / Stift absteht, der zum daran Verankern eines finalen Zahnersatzes ausgelegt ist.

Aus dem Stand der Technik, etwa der DE 10 2015 122 800 B3 ist ein knochenstrukturangepasst ausgeformtes Implantat mit einem Sockel und ein zugehöriges Fertigungsverfahren bekannt. Diese ältere Erfindung betrifft ein Implantat zum Anbringen an einem Knochen mit einer Trägerstruktur, die wenigstens einen Knochenstruktur folgenden Befestigungsabschnitt zum Angebracht werden an dem Knochen aufweist, wobei von der Trägerstruktur ein Sockel zum Aufnehmen einer Prothese direkt oder unter Verwendung eines Zwischenteils / Abutments absteht. Des Weiteren betrifft diese ältere Erfindung auch ein Verfahren zum Herstellen eines Implantates, mit dem Schritt des Erfassens individueller Patientendaten, Erstellen der Trägerstruktur und/oder des Sockels auf Basis der individuellen Patientendaten. Das Besondere an diesem älteren Implantat ist, dass von der Trägerstruktur ein Sockel zum Aufnehmen einer Prothese direkt oder unter Verwendung eines Zwischenteils absteht, wobei der Sockel ein integraler / einstückiger Bestandteil der Trägerstruktur ist. Bemerkenswert bzgl. des Verfahrens ist es, dass die Trägerstruktur auf Basis der individuellen Patientendaten, die mittels CAD/CAM-Techniken erfasst wurden, gefertigt ist.

WO 02/074181 A1 offenbart ebenfalls ein Implantat mit einer Trägerstruktur, die zum knochenkonturfolgenden Verankern an einem Kiefer- und/oder Schädelknochen vorbereitet ist.

Bisher wurden besagte Implantate auch schon verwendet und am Knochen befestigt, d.h. implantiert. Die bisherigen Trägerstrukturen wurden dann üblicherweise während der Operation mit Weichgewebe bedeckt. Dazu wurde üblicherweise die Gingiva, also ein Teil der Mundschleimhaut verwendet.

Das Bedecken der Trägerstruktur erfolgte dabei üblicherweise dadurch, dass wenigstens die Pfosten, welche auch als Sockel bezeichnet werden können, durch die Gingiva, also durch das Weichgewebe, hindurch ragten. Während des Einheilprozesses zeigte sich aber, dass das Weichgewebe, also üblicherweise die Gingiva, die Pfosten / Sockel überwucherte. Infolge dessen, musste vor dem Einsetzen des endgültigen / finalen Zahnersatzes dann jeder einzelne Pfosten / Sockel wieder operativ freigelegt werden. Dies ist aus Patientensicht umständlich und ungewünscht.

Es ist daher die Aufgabe der vorliegenden Erfindung, die durch die Ansprüche definiert ist, ein besseres Implantat zur Verfügung zu stellen und ein System vorzustellen, das als Weichgewebeverdrängungssystem bis zum Einsetzen des finalen Zahnersatzes einsetzbar ist. Die Kosten für ein solches Implantat bzw. ein solches Weichgewebeverdrängungssystem sollen möglichst gering bleiben, die Angepasstheit an den spezifischen Patienten jedoch so groß wie möglich sein. Ein besonders geschickter / cleverer Kompromiss soll auch besonders effizient, exakt und schnell gefertigt werden können. Deswegen ist es auch die Aufgabe der Erfindung, ein verbessertes Fertigungsverfahren und Planungsverfahren zur Verfügung zu stellen. Ferner ist es die Aufgabe der vorliegenden Erfindung, die Nachteile aus dem Stand der Technik zu beseitigen oder wenigstens zu mildern.

Diese Aufgabe wird bei einem gattungsgemäßen Implantat erfindungsgemäß dadurch gelöst, dass der Pfosten/Sockel/Stift eine von der Trägerstruktur und vorzugsweise aus Trägerstrukturmaterial geformte Basis besitzt, die unter Zwischenschaltung eines radialen Erweiterungsbereiches von einem distalen Endbereich komplettiert ist. Vorzugsweise weist der Pfosten einen Außendurchmesser auf, der im Bereich des radialen Erweiterungsbereiches am größten ist und im Bereich des distalen Endbereichs und/oder der Basis kleiner als im Bereich des radialen Erweiterungsbereichs ist. Besonders bevorzugt ist es, wenn sich der Außendurchmesser im Bereich des distalen Endbereichs zu seinem distalen Ende hin, insbesondere kontinuierlich, verjüngt.

Auf diese Weise kann einerseits das Aufsetzen eines Niederhalters und andererseits das Aufsetzen eines finalen Zahnersatzes so exakt durchgeführt werden, dass die Endposition des Niederhalters und finalen Zahnersatzes relativ zur Trägerstruktur und gleichzeitig auch innerhalb des Patienten exakt vorbestimmt ist. Ein gutes Kauverhalten des Patienten und angenehmes Empfinden des Patienten ist dann hervorrufbar. Durch die radialen Erweiterungsbereiche, die an jedem Pfosten vorhanden sind, ist auch sichergestellt, dass beim Bedecken der Trägerstruktur mit Weichgewebe bis zu den radialen Erweiterungsbereichen die distalen Endbereiche frei bleiben. Während des Einheilens ist ferner sichergestellt, dass normalerweise die distalen Endbereiche auch von Weichgewebe unbedeckt bleiben. Eine schnellere und unkompliziertere Versorgung des Patienten kann dadurch erreicht werden.

Erfindungsgemäß besitzt der distale Endbereich eine Verdrehverhinderungsabflachung. Alternativ und nicht beansprucht, kann der Endbereich auch einen Vorsprung aufweisen, der als eine Drehsicherung dient. Gemäß einer vorteilhaften Weiterbildung können/kann der finale Zahnersatz und/oder der Niederhalter an die Form der Verdrehverhinderungsabflachung angepasst sein, d.h. beispielsweise einen der Form der Abflachung entsprechenden Vorsprung aufweisen. Durch die Ausbildung der Pfosten (und des finalen Zahnersatzes bzw. des Niederhalters) in einer von einer Rotationssymmetrie abweichenden Form kann eine Relativverdrehung zwischen dem Niederhalter bzw. dem Zahnersatz und der Trägerstruktur sicher ausgeschlossen werden, selbst wenn nur ein Pfosten an der Trägerstruktur ausgebildet ist. Somit lässt sich vorteilhafterweise eine Verdrehung des Niederhalters relativ zur Trägerstruktur und des finalen Zahnersatzes relativ zur Trägerstruktur mit einfachen Mitteln dauerhaft ausschließen.

Vorteilhafte Ausführungsformen sind in den Unteransprüchen beansprucht und werden nachfolgend näher erläutert.

Gemäß der beanspruchten Erfindung stehen mehrere Pfosten von der Trägerstruktur ab, wobei die Verdrehverhinderungsabflachungen der mehreren Pfosten parallel zueinander angeordnet sind. Das heißt, dass die Ebenen, in denen jeweils eine Verdrehverhinderungsabflachung jeweils angeordnet ist, parallel zueinander ausgerichtet sind.

So ist es von Vorteil, wenn der distale Endbereich zum Verankern eines Niederhalters von Weichgewebe und/oder zum Verankern eines finalen Zahnersatzes vorbereitet / bemessen und vorgesehen ist. Auf diese Weise können ein und dieselben Pfosten / Sockel verwendet werden, um einerseits den Niederhalter präzise zu positionieren und andererseits den finalen Zahnersatz präzise und endgültig zu halten.

Durch den distalen Endbereich, der eine Retentionsform besitzt und kegelig oder pyramidenförmig in Richtung seines Endes zuläuft, kann die Lage der Einzelteile zueinander genauer bestimmt werden. Zudem wird so ein Aufschieben des finalen Zahnersatzes und/oder des Niederhalters ermöglicht. Gemäß einer bevorzugten Ausführungsform ist die Retentionsform elastisch verformbar, so dass ein zerstörungsfreies Entfernen des Niederhalters und/oder des finalen Zahnersatzes möglich ist.

Es hat sich bewährt, wenn der radiale Erweiterungsbereich als um den Pfosten / den Sockel umlaufender Kragen ausgebildet ist. Besonders bevorzugt ist es, wenn der Kragen einen im Wesentlichen halbkreisförmigen Querschnitt besitzt. Einerseits lässt sich dann die Fertigung vereinfachen und andererseits die operative Nutzung verbessern. So lässt sich das Weichgewebe präziser auf der Trägerstruktur ablegen. Eine besonders anatomische Versorgung des Patienten lässt sich dann erreichen, wenn der Kragen in einer gemeinsamen Ebene aufgenommen ist, durch die vorzugsweise lotrecht die Mittelachse / Symmetrieachse des Pfostens / Sockels verläuft.

In einer bevorzugten Ausführungsform sind die radialen Erweiterungsbereiche der mehreren Pfosten in einer gemeinsamen Ebene angeordnet. Dadurch wird gewährleistet, dass ein im Wesentlichen plattenförmig ausgebildeter Niederhalter, der kostengünstig und einfach herstellbar ist, aufgenommen werden kann.

Ein vorteilhaftes Ausführungsbeispiel ist auch dadurch gekennzeichnet, dass der Pfosten / der Sockel eine Tulpenform bspw. oberhalb oder unterhalb des Kragens besitzt oder aber bei Betrachtung über die gesamte Länge des Pfostens besitzt. Ein besseres Zurückhalten des Weichgewebes lässt sich dann realisieren.

Wenn der gesamte Pfosten / Sockel oder ein Teilbereich dessen im Vergleich zu den Pfosten / dem Sockel umgebenden Bereich der Trägerstruktur modifiziert ist und/oder eine andere Oberflächenbeschaffenheit besitzt, so lässt sich das Implantat besonders belastungsgerecht auslegen.

Es hat sich in der Praxis bewährt, wenn modifizierte oder oberflächenverändernde Bereiche des Pfostens / Sockels poliert und/oder beschichtet und/oder geätzt sind, insbesondere eine Oberflächenrauigkeit von Rz 0,04 µm bis Rz 25 µm, vorzugsweise Rz 1,15 µm besitzen.

In diesem Zusammenhang ist es auch von Vorteil, wenn der modifizierte Bereich des Pfostens oder der ganze Pfosten, unter Umständen sogar das ganze Implantat, eine antibakterielle Beschichtung aufweist, insbesondere im Bereich einer geplanten Durchsetzstelle durch das Weichgewebe, wie die Gingiva. Der Einheilprozess verläuft dann besonders komplikationslos.

Wenn im Pfosten ein Gewinde zum Aufnehmen einer Verankerungsschraube vorhanden ist, dessen Zentralachse konzentrisch zur Mittelachse / Symmetrieachse des Pfostens / Sockels aufgerichtet / angeordnet ist, so lässt sich einerseits der Niederhalter besonders einfach und dauerhaft am Pfosten festlegen und andererseits wieder entfernen, um dann von einem finalen Zahnersatz abgelöst zu werden. Auch dessen Verankerung ist dann nicht nur (komplex) lösbar, sondern auch einfach. Natürlich kann statt einer lösbaren Verbindung auch eine dauerhafte Verbindung eingesetzt werden.

Ferner hat es sich bewährt, wenn in der Trägerstruktur Aufnahmelöcher für solche Befestigungsschrauben vorgesehen sind, mittels derer das Implantat am Knochen des Patienten zu befestigen ist, wobei wenigstens eines der Aufnahmelöcher einen Locking-Mechanismus / Verriegelungsmechanismus zur Verfügung stellt.

Dabei ist es von Vorteil, wenn der Locking-Mechanismus zum Verriegeln der Befestigungsschraube an der Trägerstruktur vorgesehen ist. Ein operatives Einsetzen des Implantates wird dadurch wesentlich vereinfacht.

Ein vorteilhaftes Ausführungsbeispiel ist auch dadurch gekennzeichnet, dass der Locking-Mechanismus dadurch realisiert ist, dass wenigstens eines der Aufnahmelöcher einen Gewindeabschnitt besitzt, der im in dem Knochen (etwa ganz) eingeschraubten Zustand der durch dieses Aufnahmeloch ragenden Befestigungsschraube durch einen Außengewindeabschnitt dieser besagten Befestigungsschraube ausgefüllt ist, also einen Formschluss dazwischen erzwingt.

Bewährt hat es sich auch, wenn von der Trägerstruktur eines oder mehrere Brückenteile abstehen, die zum von einer Befestigungsstelle fernen / ortsfernen Anbringen, etwa außerhalb / fern vom Kiefer und/oder fern von Alveolar-Fortsätzen, ausgelegt ist / sind. Das Versorgen von größeren Tumoren ist dann auch einfacher möglich.

Das Abstimmen des Implantats auf den speziellen Patienten und die zu erwartende individuelle Belastungssituation wird dann vereinfacht, wenn die Trägerstruktur in deren pfostenlosen Bereichen unterschiedliche Dickenabschnitte besitzt.

Beispielsweise hat es sich bewährt, wenn einige der unterschiedlichen Dickenabschnitte gezielt so ausgelegt sind, dass sie als Verstrebungen und/oder Verstärkungen und/oder Federbereiche wirken.

Das Einheilen des Implantats und Heilen des Weichgewebes verläuft üblicherweise dann besonders komplikationslos, wenn die Aufnahmelöcher so auf die dort einzusetzende Befestigungsschraube abgestimmt ist, dass die Befestigungsschraube im (ganz) in den Knochen eingesetzten Zustand plan / bündig mit der Oberfläche des diese umgebenden Trägerstruktur ist.

Es hat sich auch als richtig herausgestellt, die gesamte Trägerstruktur inklusive oder exklusive der Pfosten oder nur die Pfosten / einen der Pfosten aus Metall und/oder aus Keramik und/oder aus Polymer (z.B. PEEK) zu fertigen. Dabei kann das besagte Material ausschließlich oder in Kombination mit anderen Materialien verwendet werden.

Ein weiteres vorteilhaftes Ausführungsbeispiel ist auch dadurch gekennzeichnet, dass die Trägerstruktur so ausgelegt ist, dass jene vom Pfosten fernen Bereiche, bspw. in Abhängigkeit von dem Abstand vom Pfosten, zunehmend flexibel / biegsam ausgelegt sind.

Die Erfindung betrifft auch ein Weichgewebeverdrängungssystem, mit einem gemäß der Erfindung ausgebildeten Implantat, das eine Trägerstruktur besitzt, die zum knochenkonturfolgenden Verankern an einem Kiefer- und/oder einem Schädelknochen(-abschnitt) vorbereitet ist, wobei von der Trägerstruktur wenigstens ein daran integral / einteilig / einmaterialig / einstückig angebrachter Pfosten / Sockel absteht, der zum daran verankern / darauf verankern eines finalen Zahnersatzes ausgelegt ist. Geschickterweise ist dabei eine Verankerungsschraubenbohrung zur Aufnahme einer befestigend wirkenden Verankerungsschraube in der Pfostenmitte vorhanden.

Die Aufgabe der Erfindung wird bei einem solchen gattungsbestimmenden Weichgewebeverdrängungssystem erfindungsgemäß dadurch gelöst, dass ein vom finalen Zahnersatz differenter Niederhalter an/auf dem Pfosten verankert ist. Auf diese Weise wird unter Nutzung eines universellen Implantats ein Weichgewebe verdrängender Niederhalter einerseits einsetzbar und das exakte Anbringen eines finalen Zahnersatzes andererseits möglich.

Ein solches Weichgewebeverdrängungssystem kann auch weitergebildet werden, wie es Gegenstand der Unteransprüche ist und nachfolgend näher erläutert ist.

So ist es von Vorteil, wenn der Niederhalter optisch und funktional an dazu benachbarte Zähne und angrenzendes Weichgewebe, wie die Mundschleimhaut / die Gingiva, angepasst ist. Auf diese Weise kann ein gutes Einpassen der Einzelteile bewirkt werden.

Es hat sich in diesem Zusammenhang auch bewährt, wenn der Niederhalter ausgelegt und bemessen ist, um ein Überwachsenwerden der Pfosten / Sockel auszuschließen / zu verhindern. Eine zusätzliche Operation zum Freilegen der Pfosten / Sockel kann dann unterbleiben.

Um die Kosten niedrig zu halten, hat es sich bewährt, wenn der Niederhalter aus Kunststoff gefertigt ist / besteht oder Kunststoffanteile besitzt.

Der Einsatz wird besonders vielseitig, wenn der Pfosten / Sockel und der Niederhalter zum Festsitzen / dauerhaft Festsitzen oder bedingt abnehmbaren, d.h. werkzeugeinsatzabhängigen / -nötigen Abnehmen oder werkzeugfreien Abnehmen Verankern aneinander angepasst sind. Diese Vielseitigkeit des Anbringens ermöglicht dann einen Einsatz bei unterschiedlichsten Patienten und unterschiedlichsten Versorgungsausgangslagen. Ein Einbau der Einzelteile ist besonders problemlos, da die dem Pfosten zugewandte Unterseite des Niederhalters wenigstens eine Vertiefung besitzt, die zur Aufnahme eines distalen Endbereiches des Pfostens / Sockels ausgelegt ist. Der Pfosten kann dann einfach in dem Niederhalter eingesetzt werden und eine Fixation bspw. unter Nutzung einer Klebmasse hervorgerufen werden.

So hat es sich in dem Zusammenhang auch bewährt, wenn die Vertiefung nach Art eines Sackloches oder alternativ nach Art eines Durchgangsloches, oder nach Art einer Wanne ausgeführt ist. Während das Sackloch der Präzision zuträglich ist, ist die Wanne eher spielausgleichend einsetzbar. Eine Wannenverwendung legt auch den Grundstein für eine Verwendung eines (einzigen / vorbestimmten) Niederhalters bei unterschiedlichen individual gefertigten Implantaten auf deren Trägerstrukturen, d.h. Pfosten.

Um den Niederhalter besonders gut auf das Implantat abzustimmen, hat es sich bewährt, wenn die Vertiefung von Seitenwänden umfasst / gebildet ist, die im aufgesetzten Zustand des Niederhalters auf dem Pfosten / dem Sockel zum (direkten) Kontaktieren des distalen Endbereiches des Pfostens / Sockels oder Zwischenschalten eines Zwischenmediums ausgelegt dimensioniert / bemaßt sind.

Als versorgungseffizient hat es sich bewährt, wenn das Zwischenmedium eine Klebmasse umfasst und/oder eine Verankerungshülse / ein Zwischenstück umfasst.

Für die Verankerungshülse ist es von Vorteil, wenn diese wenigstens einen radial abstehenden Verankerungszapfen besitzt oder mehrere radial abstehende Verankerungszapfen besitzt, vorzugsweise zwei voneinander weg weisende Verankerungszapfen auf gegenüberliegenden Seiten der Verankerungshülse besitzt. Ein besonders guter Hintergriff, welcher vorteilhaft für den Rückhalt ist, lässt sich dann hervorrufen.

Dabei ist es von Vorteil, wenn der Verankerungszapfen oder die Verankerungszapfen an einem niederhalternahen Ende der Verankerungshülse vorhanden ist/sind.

Für die Präzision der Verankerung ist es von Vorteil, wenn die Vertiefung zur Aufnahme eines einzigen Pfostens / Sockels ausgelegt ist, wobei es von Vorteil ist, wenn die Vertiefung zur Aufnahme mehrerer Pfosten / Sockel ausgelegt ist, da dann eine größere Universaleinsetzbarkeit die Folge ist.

Um ein schnelles Versorgen des Patienten zu erreichen, hat es sich bewährt, wenn die Klebmasse als Zement oder Kleber ausgebildet ist.

Für ein optisch ansprechendes Ergebnis ist es von Vorteil, wenn der Niederhalter einen implantatsnahen Gingiva-Nachbildbereich besitzt, der von einem implantatsfernen Zahnnachbildbereich komplettiert ist.

Um eine Rotation des Niederhalters relativ zum Implantat auszuschließen, ist es von Vorteil, wenn mehrere voneinander beabstandete Vertiefungen der Niederhalter vorhanden sind.

Ein vorteilhaftes Ausführungsbeispiel ist auch dadurch gekennzeichnet, dass der Niederhalter über Verankerungsschrauben am Implantat festgelegt ist, wobei wenigstens eine der Verankerungsschrauben im Pfosten / Sockel befestig ist und durch den Niederhalter hindurch ragt. Natürlich kann die Verankerungsschraube nicht nur am Pfosten / dem Sockel angreifen, sondern auch an anderen Stellen der Trägerstruktur.

Ein vorteilhaftes Ausführungsbeispiel ist auch dadurch gekennzeichnet, dass die Verankerungsschraube mittig / zentral / zentrisch / konzentrisch zum Posten / Sockel angeordnet ist und/oder parallel / windschief / quer / konzentrisch zu einer Zentralachse / Mittenachse durch den Pfosten / Sockel ausgerichtet ist.

Wenn die Verankerungsschraube in einem Durchgangsloch des Niederhalters, beabstandet zur implantatsfernen Oberfläche des Zahnnachbildbereiches versenkt ist, so ist ein problemloses Verankern möglich.

Während der Nutzung durch den Patienten hat es sich dann bewährt, wenn ein Schraubenkopf der Verankerungsschraube von einem mit der implantatsfernen Oberfläche des Zahnnachbildbereiches bündig eingesetztes Abdeckelement zugedeckt ist.

Von Vorteil ist es ferner, wenn die Vielzahl an Vertiefungen und die Vielzahl an Pfosten so aufeinander abgestimmt sind, dass ein Aufsetzen / Aufschieben des Niederhalters in einer einzigen vorbestimmten Richtung möglich / vorgegeben ist, vorzugsweise von oben, etwa einerseits bei a) Befestigung des Implantats am Unterkiefer, oder von unten, etwa bei b) Befestigung des Implantats am Oberkiefer, und/oder andererseits bei Befestigung des Implantats an einem Abschnitt des Schädelknochens.

Die Erfindung betrifft auch ein Fertigungsverfahren eines Weichgewebeverdrängungssystems der erfindungsgemäßen Art, wobei in einem vorbereitenden Schritt durch Standardmessapparate, etwa durch in der Zahnmedizin international übliche Standardabdrucklöffel der Größen "0" bis "4", erfasste Informationen über die individuelle Zahnreihenbogenform verwendet werden, um aus einer Menge an vorkonfektionierten Standardniederhaltern einen bestimmten auszuwählen, wobei nachfolgend in Abhängigkeit von patientenspezifischen Gegebenheiten eine Anpassung der Gesamterstreckung vorgenommen wird. Die Information über den Standardabformlöffel liefert eine hinreichende Information über die Eingrenzung der Kurvenkrümmung der - je Kiefer - Zahnreihe bzw. der Schneidkanten-(im Frontzahnbereich) und Längsfissuren-(im Seitenzahnbereich) verbindenden Kurve. Das Charmante ist dann, dass ein modellfreies, digitales Einkürzen auf den Bereich "von Interesse" (also, auf den Bereich der ersetzt werden soll), um "nur" das Weichgewebe-Verdränungselement zu erzeugen. Alternativ kann zusätzlich auch noch über den verbliebenen Restzahnbestand und den virtuell ergänzten Zahnbestand oder alternativ das einteilige Implantat mit Gerüststruktur und anhängenden Pfosten auch eine weitere Schablone / ein Schlüssel aus Kunststoff und/oder Metall erstellt werden, um die Orientierung der bestehenden Zahnstrukturen zu dem neuen einteiligen Implantat mit Pfosten (und/oder ergänzt um das Weichgewebeverdrängungselement) zu überprüfen, also zur Qualitätssicherung. Ferner könnte auch die Kombination so einer zusätzlichen Schablone dazu dienen, auch z.B. konventionelle Implantate zusätzlich zu dem einteiligen Implantat mit Gerüststruktur exakt in Vektor-Bohrung und Position auszurichten.

In diesem Zusammenhang ist es auch von Vorteil, wenn eine oder mehrere Vertiefungen in dem Niederhalter angebracht werden, um eine Koppelung mit (jeweils) einem oder mehreren Pfosten eines patientenspezifisch gefertigten Implantats vornehmbar zu machen.

Die Erfindung betrifft letztlich auch ein Planungsverfahren zum Fertigen eines Implantats mit einem Niederhalter für ein erfindungsgemäßes Weichgewebeverdrängungssystem, wobei eine individuelle Trägerstruktur / Gerüststruktur des Implantats geplant wird und das Implantat mit Standardzahnkranzanteilen zum Ausbilden eines Niederhalters für Weichgewebe versehen wird, wobei jene zum Aufnehmen des Niederhalters vorgesehenen Pfosten nach Abnahme des Niederhalters zum Aufnehmen eines individuellen Zahnersatzes ausgelegt werden.

Hintergrund der Erfindung ist es, dass momentan in der Medizin allgemein eine Individualisierung gewünscht ist, die Funktionalisierung jedoch noch nicht hinreichend durchschaut ist. Durch die Erfindung wird auch eine spätere Aktivierung, ein Einsatz von Messungen und ein Einsatz von Beschichtungsverfahren möglich. Ferner ist angedacht ist es auch eine Reservoir-Funktion für bestimmte bioaktive Wirksubstanzen vorzuhalten.

Dabei kann entweder das Weichgewebeverdrängungselement selber oder der spätere Zahnersatz ein Binnenvolumen-Reservoir beinhalten, um dann jedwede Substanzen - bevorzugt flüssige - abzugeben. Dieser Aspekt könnte durch den Einsatz von Mikromotoren / -pumpen umgesetzt werden. Insbesondere vasoaktive Substanzen können so eingebracht werden. Auch eine Energie- oder Substanzspeicherfunktion lässt sich umsetzen. Das Erreichen von Connector-Systemen, wie bspw. Kauenergie als elektrische Energie zu speichern, ist denkbar. Letztlich wird ein Funktionalisieren und Individualisieren auf Basis von Standardelementen ermöglicht. Der Einsatz eines Provisoriums mit der speziellen Aufgabe eines Weichgewebeverdrängungssystems wird patientenfreundlicher. Dabei wirkt der Niederhalter als ein Riegel, der auf Pfosten der nach Art einer Zwischenstruktur ausgebildeten Trägerstruktur befestigt / aufgebracht ist. Das Aufbringen kann zum Erreichen eines Festsitzes oder einer "bedingten" Abnehmbarkeit oder einer "vollständigen" Abnehmbarkeit ausgestaltet sein.

Im Fertigungsverfahren ist auch der Einsatz bildgebungsgestützter Maßnahmen, wie etwa CT-Erfassungen denkbar, wobei andererseits auch auf einfache Beobachtungen, bspw. optischer Natur, zugegriffen werden kann, um die Bestimmung der Erstreckung des Defekts durchzuführen. Letztlich wird das Fertigen eines für das Individuum angepassten Niederhalters aus einem von fünf Standardniederhalter-Rohlingen propagiert. Solche Standardniederhalter-Rohlinge haben dann im Bedarfsfall Aufnahmelöcher oder Aufnahmewannen zur Aufnahme des Pfostens des Implantats. Es können auch Abformkappen / Verankerungshülsen mit radial abstehenden Retentionsnasen für einen Formschluss eingesetzt werden. Dadurch muss weniger Füllmaterial, wie Zement oder Kleber eingesetzt werden. Allerdings wird gleichzeitig eine bessere Anpassung an die Oberfläche der Pfosten erreicht.

Durch die Erfindung wird das gezielte Formen von Weichgewebe erst ermöglicht. Statt Klebern oder Kleberfüllungen zur Fixierung an den Pfosten lassen sich natürlich auch Schrauben einsetzen, sowie Klemmen und Federmechanismen. Bestenfalls haben solche Pfosten alle eine parallele Ausrichtung, um eine spezifische Einsetzrichtung vorzugeben.

Die Verankerung weit von Problemzonen weg und eine präzisere Lage im Raum wird durch die Erfindung ebenfalls erreicht bzw. ermöglicht.

Das Planverfahren ermöglicht also eine digitale Verbindung der individuellen Gerüststruktur / des individuellen Implantats mit aus Standardelementen für das Individuum gefertigten Zahnkranzteilen und/oder mit individuellen Zahnersatzstücken.

Mit anderen Worten ist im Kern der Erfindung vorgesehen die Durchtrittsstellen des Pfostens bzgl. ihrer Oberflächenbeschaffenheit anders auszugestalten / zu modifizieren, als den Rest des Implantats. Ein Polieren, Beschichten und Ätzen bietet sich dabei an. Ein Locking-Mechanismus wird ferner realisiert. In einem Durchgangsloch des Implantates ist bspw. ein Gewindeabschnitt vorhanden, der in jenem in den Knochen ganz eingedrehten Zustand der Schraube einen Formschluss (mit) eingeht. Eine ortsfeste Befestigung außerhalb vom Kiefer und/oder fern von den Alveolar-Fortsätzen ist möglich. Der Einsatz unterschiedlicher Plattenstärken ist geplant. Diese Plattenstärken sollen angepasst sein auf die Verbindungsschraubenkopfhöhe oder derart, dass sie je weiter sie von dem Pfosten sind, umso biegsamer sind. Eine gute Erfüllung der jeweiligen biomechanischen Anforderungen ist die Folge. Die Schraubenköpfe und das umgebende Plattenmaterial bilden bestenfalls eine plane Oberfläche. Es ist denkbar bspw. nur die Pfosten aus Keramik zu fertigen und den Rest der Trägerstruktur aus Metall zu fertigen oder aber für bestimmte Teile Polymer, wie PEEK, einzusetzen. Ferner ist eine antibakterielle Beschichtung der Durchtrittsstelle oder des ganzen Pfostens oder des ganzen Implantats denkbar. Eine Tulpenform der Pfosten ermöglicht ein besseres Zurückhalten des Weichgewebes. Im Pfosten kann auch ein Gewinde vorhanden sein, welches von oben für die Rückhalteschraube zugänglich ist.

Die Erfindung wird nachfolgend mit Hilfe einer Zeichnung näher erläutert. Dabei sind unterschiedliche Ausführungsbeispiele dargestellt.

Es zeigen:
Fig. 1 eine Ansicht von vorne auf ein erfindungsgemäßes Implantat mit daran angebundenem erfindungsgemäßem Niederhalter zum Darstellen eines erfindungsgemäßen Weichgewebeverdrängungssystems,
Fig. 2 eine zweite Ausführungsform eines solchen Weichgewebeverdrängungssystems,
Fig. 3 eine weitere perspektivische Darstellung des Ausführungsbeispiels aus Fig. 2,
Fig. 4 das Implantat aus Fig. 1 mit abgenommenem Niederhalter,
Fig. 5 das singuläre Implantat aus Fig. 4 in Anlage an einen Unterkieferknochen,
Fig. 6 eine weitere Darstellung des Implantats aus Fig. 5 bei Betrachtung von oben,
Fig. 7 eine singuläre Darstellung des Niederhalters, von einer Implantatsseite, wie er in den Ausführungsbeispielen der Fign. 1 und 4 eingesetzt ist,
Fig. 8 zwei Varianten eines alternativen Niederhalters zur Ausgestaltung des Niederhalters aus Fig. 7,
Fig. 9 eine Ansicht des auf die Trägerstruktur eines alternativen Implantat aufgesetzten alternativen Niederhalters,
Fig. 10 eine Vergrößerung der Pfosten an der Trägerstruktur eines Implantats,
Fig. 11 eine zwischen dem Niederhalter und der Trägerstruktur eingesetzte Verankerungshülse, und
Fig. 12 eine weitere Ausführungsform eines erfindungsgemäßen Implantats mit besonders fern einer Versorgungsstelle auskragenden Brückenteilen.

Die Figuren sind lediglich schematischer Natur und dienen nur dem Verständnis der Erfindung. Die gleichen Elemente sind mit denselben Bezugszeichen versehen. Merkmale der einzelnen Ausführungsbeispiele können untereinander ausgetauscht werden.

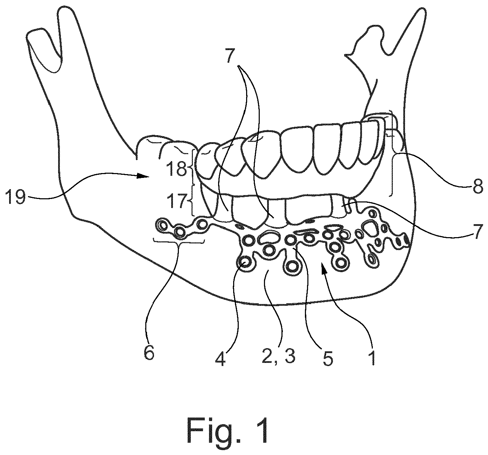

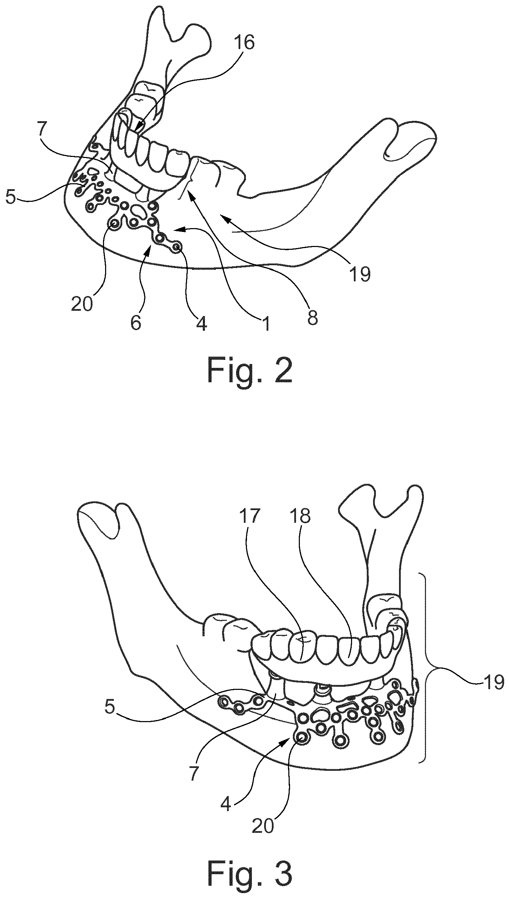

In Fig. 1 ist ein erfindungsgemäßes Implantat 1 dargestellt. Das Implantat 1 ist an einem Kieferknochen 2, nämlich einem Unterkieferknochen zu verankern. Im dargestellten Zustand sind noch keine Befestigungsschrauben 20 (siehe hierfür Fig. 2) eingesetzt. Die Befestigungsschrauben 20 sind aber zum Durchgreifen von Aufnahmelöchern 4 vorgesehen. Diese Aufnahmelöcher 4 können in einer gitterartigen Struktur, nämlich einer Trägerstruktur 5 vorhanden sein. Insbesondere können sie in Befestigungsabschnitten 6 vorhanden sein.

Im in Fig. 1 dargestellten Ausführungsbeispiel weist die Trägerstruktur 5 drei Pfosten 7 auf, die auch als Sockel bezeichnet werden können. Auf die Pfosten 7 ist ein Niederhalter 8 aufgesteckt. Dieser Niederhalter 8 ist passgenau auf die Pfosten 7 aufgesteckt.

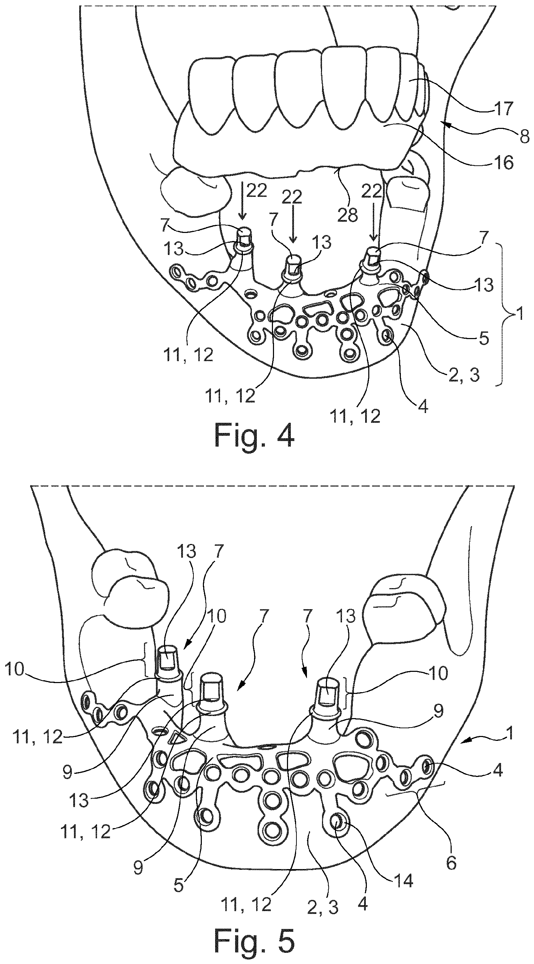

Wie in Fig. 5 gut zu erkennen ist, weist jeder Pfosten 7 eine Basis 9 auf. An einem distalen Ende des jeweiligen Pfostens 7 ist ein distaler Endbereich 10 vorhanden. Zwischen dem distalen Endbereich 10 und der Basis 9 ist ein radialer Erweiterungsbereich 11 vorhanden. Der radiale Erweiterungsbereich 11 ist nach Art eines Kragens 12 ausgebildet. Der Kragen 12 ist um die Oberfläche des Pfostens 7 herumlaufend, also umlaufend ausgebildet und liegt in einer speziellen Ebene. Diese Ebene ist jene Ebene, die lotrecht zur Mittelachse / Symmetrieachse des Pfostens 7 ausgerichtet ist. Letztlich hat der Pfosten 7 eine Tulpenform.

Der Pfosten 7 hat an der Vorderfront eine Abplattung 13. Die Abplattung 13 kann auch als Abflachung bezeichnet werden und dient zur Realisierung einer Verdrehverhinderungsabflachung.

In dem Ausführungsbeispiel der Fig. 5 ist auch gut zu erkennen, dass im Aufnahmeloch 4 ein Gewindeabschnitt 14 vorhanden ist, der zum Interagieren und formschlüssig ausgefüllt werden von einem Außengewinde der nicht dargestellten Befestigungsschraube 20 vorgesehen ist. Die Befestigungsschraube 20 dringt dabei in den Knochen, nämlich den Kieferknochen 2 hinein.

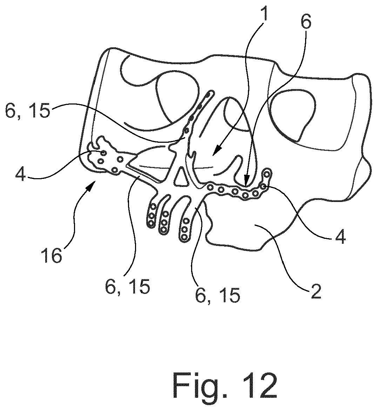

Unter Vorgriff auf Fig. 12 sei bereits erläutert, dass bestimmte Befestigungsabschnitte 6 als Brückenteile 15 ausgebildet sein können. Es ist auch möglich, dass an einem distalen Ende eines solchen Brückenteils 15 eine Zusatzgitterstruktur 16, etwa nach Art einer Platte vorhanden ist. Jene Platte kann wiederum Aufnahmelöcher 4 besitzen, wie es in dem Ausführungsbeispiel der Fig. 12 realisiert ist.

Zurückkommend auf Fig. 1 sei erläutert, dass der Niederhalter einen Gingiva-Nachbildbereich 17 besitzt, der mundraumseitig von einem implantatsfernen Zahnnachbildbereich 18 komplementiert ist.

Das Implantat 1 und der Niederhalter 8 bilden zusammen ein Weichgewebeverdrängungssystem 19.

In dem Ausführungsbeispiel der Fign. 2 und 3 sind in Aufnahmelöcher 4 bereits Befestigungsschrauben 20 eingesetzt. Wie auch gut in der Fig. 2 aber auch der Fig. 3 zu erkennen ist, ist die mit dem Bezugszeichen 21 markierte Oberfläche mit einer anderen Oberflächenbeschaffenheit versehen, als die benachbarten Elemente der Trägerstruktur 5.

In Fig. 4 ist das Aufsetzen entlang der Pfeile 22 dargestellt. Der Niederhalter 8 wird somit auf die Pfosten 7, die integral / einstückig / einmaterialig von der Trägerstruktur 5 abstehen aufgesetzt. Dabei sitzt jene mit dem Bezugszeichen 23 referenzierte Unterkante 23 des Niederhalters 8 auf dem Kragen 12 auf, wobei alternativ auch eine Beabstandung angedacht sein kann.

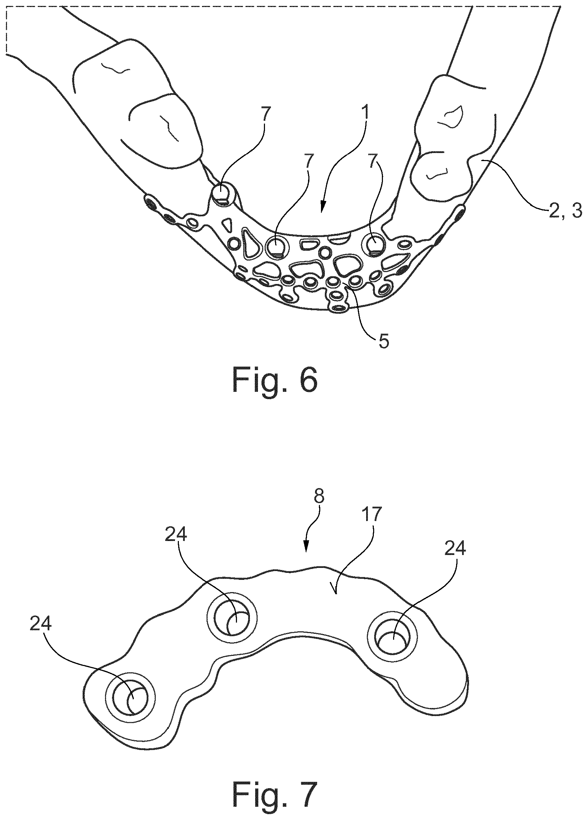

Wie in Fig. 7 gut zu erkennen ist, besitzt der Niederhalter 8 Vertiefungen 24, damit die Pfosten 7 dort eingesetzt werden können.

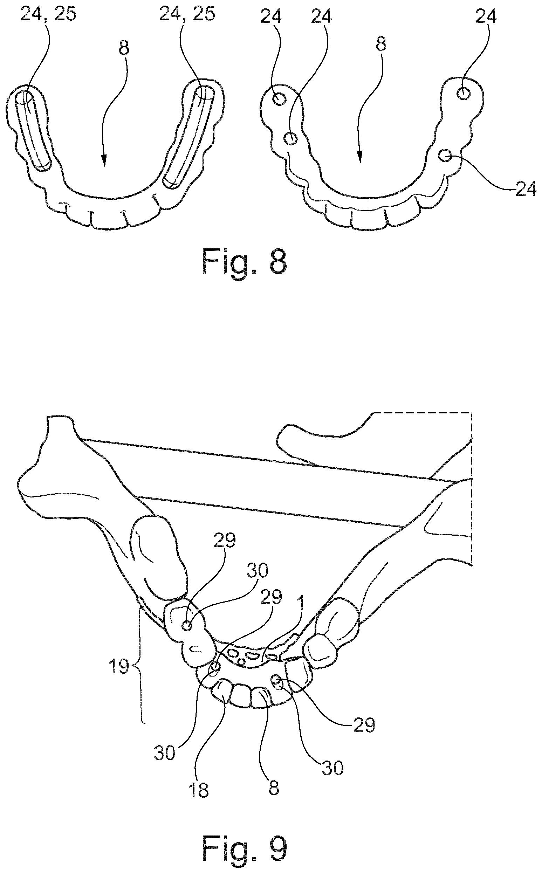

In Fig. 8 sind zwei unterschiedliche Ausführungsformen von Niederhaltern 8 dargestellt, nämlich auf der linken Seite ein solcher Niederhalter 8, der zwei Vertiefungen 24 aufweist, die jeweils als Wannen 25 ausgebildet sind. Der auf der rechten Seite in der Fig. 8 dargestellte Niederhalter 8 weist vier als Sacklöcher ausgebildete Vertiefungen 24 auf.

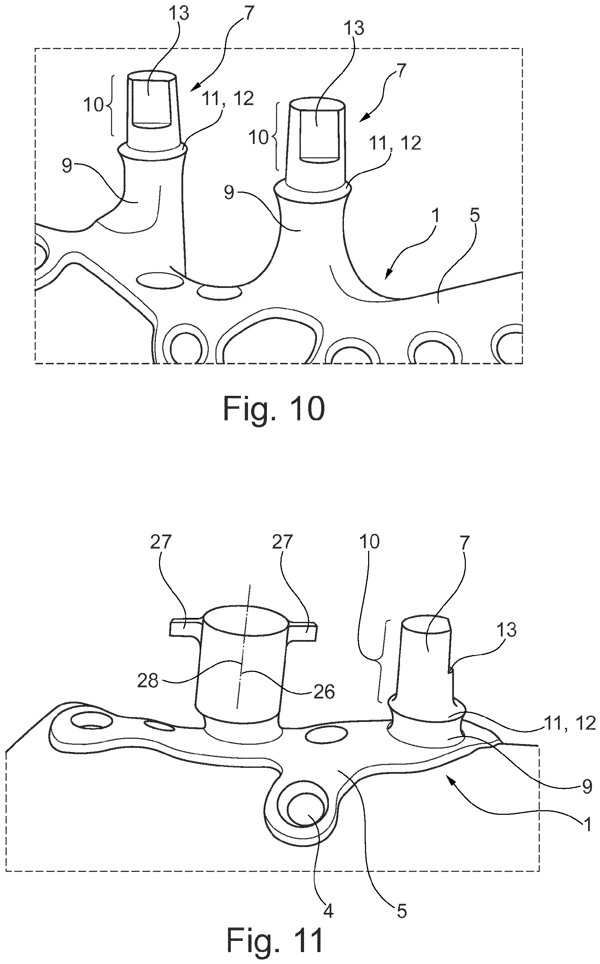

In Fig. 11 ist eine Verankerungshülse 26 dargestellt, die zwischen einem nicht dargestellten Niederhalter 8 und der Trägerstruktur 5 einzusetzen ist. Die Verankerungshülse 26 weist zwei Verankerungszapfen 27 auf. Die beiden Verankerungszapfen 27 der Verankerungshülse 26 ragen in entgegengesetzte Richtungen radial auf gegenüberliegende Seiten der Verankerungshülse 26 von dieser (orthogonal zu einer Mittelachse 28 des Pfostens 7) ab.

In dem in Fig. 9 dargestellten Ausführungsbeispiel sind Verankerungsschrauben 29 eingesetzt, um den Niederhalter 8 vom Implantat 1 festzulegen und dann ein erfindungsgemäßes Weichgewebeverdrängungssystem 19 zu generieren. Jene Sacklöcher 30, in denen die jeweilige Verankerungsschraube 29 versenkt sind, können jeweils durch ein nicht dargestelltes Abdeckelement zugedeckt werden.

Zwei der in den Fign. 4 und 6 gut zu erkennenden Pfosten 7 sind in Fig. 10 größer dargestellt.

### Bezugszeichenliste

- 1: Implantat
- 2: Kieferknochen
- 3: Unterkieferknochen
- 4: Aufnahmeloch
- 5: Trägerstruktur
- 6: Befestigungsabschnitt
- 7: Pfosten
- 8: Niederhalter
- 9: Basis
- 10: distaler Endbereich des Pfostens
- 11: radialer Erweiterungsbereich
- 12: Kragen
- 13: Abplattung
- 14: Gewindeabschnitt
- 15: Brückenteil
- 16: Zusatzgitterstruktur
- 17: Gingiva-Nachbildbereich
- 18: Zahnnachbildbereich
- 19: Weichgewebeverdrängungssystem
- 20: Befestigungsschraube
- 21: Oberfläche des Pfostens
- 22: Aufsitzrichtung
- 23: Unterkante
- 24: Vertiefung
- 25: Wanne
- 26: Verankerungshülse
- 27: Verankerungszapfen
- 28: Mittelachse
- 29: Verankerungsschraube
- 30: Sackloch

## Patentansprüche

1. Implantat (1) mit einer Trägerstruktur (5), die zum knochenkonturfolgenden Verankern an einem Kiefer- und/oder Schädelknochen (2) vorbereitet ist, wobei von der Trägerstruktur (5) mehrere integral angebrachte Pfosten (7) abstehen, die zum daran Verankern eines finalen Zahnersatzes ausgelegt sind, wobei jeder Pfosten (7) eine von der Trägerstruktur (5) ausgeformte Basis (9) besitzt, die unter Zwischenschaltung eines radialen Erweiterungsbereiches (11) von einem distalen keglig oder pyramidenförmig zulaufenden Endbereich (10) komplettiert ist, wobei der distale Endbereich (10) eine in einer Ebene angeordnete Verdrehungsverhinderungsabflachung zum Verhindern einer Relativverdrehung zwischen der Trägerstruktur (5) und dem an dem Pfosten (7) verankerbaren finalen Zahnersatz besitzt, **dadurch gekennzeichnet, dass** die Ebenen, in denen jeweils eine Verdrehungsverhinderungsabflachung angeordnet ist, parallel zueinander ausgerichtet sind.

2. Implantat (1) nach Anspruch 1, **dadurch gekennzeichnet, dass** der distale Endbereich (10) zum Verankern eines Niederhalters (8) von Weichgewebe und/oder zum Verankern eines finalen Zahnersatzes vorbereitet ist.

3. Implantat (1) nach Anspruch 1 oder 2, **dadurch gekennzeichnet, dass** der distale Endbereich (10) eine Retentionsform besitzt.

4. Implantat (1) nach einem der Ansprüche 1 bis 3, **dadurch gekennzeichnet, dass** der radiale Erweiterungsbereich (11) als um den Pfosten (7) umlaufender Kragen (12) ausgebildet ist.

5. Implantat (1) nach Anspruch 4, **dadurch gekennzeichnet, dass** der Kragen (12) in einer Ebene aufgenommen ist, durch die eine Mittelachse des Pfostens (7) lotrecht verläuft.

6. Implantat (1) nach einem der Ansprüche 1 bis 5, **dadurch gekennzeichnet, dass** mehrere Pfosten (7) von der Trägerstruktur (5) abstehen, wobei die radialen Erweiterungsbereiche (11) der mehreren Pfosten (7) in einer gemeinsamen Ebene angeordnet sind.

7. Weichgewebeverdrängungssystem (19) mit einem Implantat (1) nach einem der Ansprüche 1-6, das eine Trägerstruktur (5) besitzt, die zum knochenkonturfolgenden Verankern an einem Kiefer- und/oder Schädelknochen (2) vorbereitet ist, wobei von der Trägerstruktur (5) mehrere Pfosten (7) abstehen, die zum daran Verankern eines finalen Zahnersatzes ausgelegt sind, **dadurch gekennzeichnet, dass** das Weichgewebeverdrängungssystem (19) einen an den Pfosten (7) verankerbaren Niederhalter (8) aufweist, der im Wesentlichen plattenförmig ausgebildet ist, und der Niederhalter (8) an einer den Pfosten (7) zugewandten Unterseite wenigstens eine Vertiefung (24) zur Aufnahme des distalen Endbereichs (10) der Pfosten (7) besitzt und an den Pfosten (7) verankert ist, wobei der distale Endbereich (10) des jeweiligen Pfostens (7) eine in einer Ebene angeordnete Verdrehungsverhinderungsabflachung zum Verhindern einer Relativverdrehung zwischen der Trägerstruktur (5) und dem an dem Pfosten (7) verankerten Niederhalter (8) besitzt und die mehreren Ebenen parallel zueinander ausgerichtet sind.

8. Weichgewebeverdrängungssystem (19) nach Anspruch 7, **dadurch gekennzeichnet, dass** der Niederhalter (8) optisch und funktional an dazu benachbarte Zähne und angrenzendes Weichgewebe angepasst ist.

9. Fertigungsverfahren eines Weichgewebeverdrängungssystem (19) nach Anspruch 7 oder 8, wobei in einem vorbereitenden Schritt durch Standardmessapparate erfasste Informationen über die individuelle Zahnreihenbogenform verwendet werden, um aus einer Menge von vorkonfektionierten Standardniederhaltern einen bestimmten auszuwählen, wobei nachfolgend in Abhängigkeit von patientenspezifischen Gegebenheiten eine Anpassung der Gesamterstreckung vorgenommen wird.

10. Planungsverfahren zum Fertigen eines Implantats (1) nach Anspruch 1 mit einem Niederhalter (8) für ein Weichgewebeverdrängungssystem (19) nach Anspruch 7 oder 8, wobei eine individuelle Trägerstruktur (5) des Implantats (1) geplant wird und das Implantat (1) mit Standard-Zahnkranzanteilen zum Ausbilden eines Niederhalters (8) für Weichgewebe versehen wird, wobei jene zum Aufnehmen des Niederhalters (8) vorgesehenen Pfosten (7) nach Abnahme des Niederhalters (7) zum Aufnehmen eines individuellen Zahnersatzes ausgelegt werden.

## Claims

1. Implant (1) comprising a support structure (5) which is prepared for anchoring, following the contours of the bone, at a jaw and/or cranial bone (2), wherein several integrally attached posts (7) project from the support structure (5), said posts being configured for anchoring a final denture thereto, wherein each post (7) has a base (9) formed by the support structure (5), which is completed by a conical or pyramidal tapering, distal end region (10) with the interposition of a radially enlarged region (11), wherein the distal end region (10) has a rotation prevention flat portion arranged in a plane for preventing relative torsion between the support structure (5) and the final denture anchorable to the post (7), **characterized in that** the planes, in each of which a rotation prevention flat portion is arranged, are aligned parallel to each other.

2. Implant (1) according to claim 1, **characterized in that** the distal end region (10) is prepared for anchoring a soft tissue holding-down device (8) and/or for anchoring a final denture.

3. Implant (1) according to claim 1 or 2, **characterized in that** the distal end region (10) has a retention form.

4. Implant (1) according to one of claims 1 to 3, **characterized in that** the radially enlarged region (11) is formed as a collar surrounding the post (7).

5. Implant (1) according to claim 4, **characterized in that** the collar (12) is received in a common plane through which a central axis of the post (7) runs perpendicularly.

6. Implant (1) according to one of claims 1 to 5, **characterized in that** several posts (7) protrude from the support structure (5), wherein the radially enlarged regions (11) of the several posts (7) are arranged in a common plane.

7. Soft tissue displacement system (19) having an implant (1) according to one of claims 1-6, which has a support structure (5) which is prepared for anchoring, following the contours of the bone, in a jaw and/or cranial bone (2), wherein several posts (7) protrude from the support structure (5), said posts (7) being configured for anchoring a final denture thereto, **characterized in that** the soft tissue displacement system (19) has a holding-down device (8) anchorable to the posts (7) which is substantially plate-shaped, and the holding-down device (8) has, at a lower side facing the posts (7), at least one recess (24) for receiving the distal end region (10) of the posts (7), and is anchored to the posts (7), wherein the distal end portion (10) of the respective post (7) has a rotation prevention flat portion arranged in a plane for preventing relative rotation between the support structure (5) and the holding-down device (8) anchored to the post (7) and the several planes are aligned parallel to each other.

8. Soft tissue displacement system (19) according to claim 7, **characterized in that** the holding-down device (8) is optically and functionally adapted to adjacent teeth and adjacent soft tissue.

9. Manufacturing method of a soft tissue displacement system (19) according to claim 7 or 8, wherein, in a preparatory step, information on the individual dental arch shape acquired by standard measuring devices is used in order to select a specific one from a set of prefabricated standard holding-down devices, wherein an adjustment of the overall extension is subsequently made depending on patient-specific conditions.

10. Planning method for manufacturing of an implant (1) according to claim 1 with a holding-down device (8) for a soft tissue displacement system (19) according to claim 7 or 8, wherein an individual support structure (5) of the implant (1) is planned and the implant (1) is provided with standard dental crown portions for forming a holding-down device (8) for soft tissue, wherein the posts (7) provided for receiving the holding-down device (8) are designed to receive an individual denture after removal of the holding-down device (7).

## Revendications

1. Implant (1) avec une structure de support (5) qui est préparée pour l'ancrage suivant le contour osseux sur un os de la mâchoire et/ou du crâne (2), dans lequel plusieurs montants (7) placés intégralement font saillie de la structure de support (5), qui sont conçus pour y ancrer une prothèse dentaire finale, dans lequel chaque montant (7) comporte une base (9) formée par la structure de support (5), qui est complétée par une zone d'extrémité distale (10) conique ou pyramidale avec interposition d'une zone d'extension radiale (11), dans lequel la zone d'extrémité distale (10) comporte un méplat antirotation disposé dans un plan pour empêcher une rotation relative entre la structure de support (5) et la prothèse dentaire finale pouvant être ancrée sur le montant (7), **caractérisé en ce que** les plans dans lesquels un méplat antirotation est disposé sont orientés parallèlement entre eux.

2. Implant (1) selon la revendication 1, **caractérisé en ce que** la zone d'extrémité distale (10) est préparée pour l'ancrage d'un serre-flan (8) de tissu mou et/ou pour l'ancrage d'une prothèse dentaire finale.

3. Implant (1) selon la revendication 1 ou 2, **caractérisé en ce que** la zone d'extrémité distale (10) comporte une forme de rétention.

4. Implant (1) selon l'une quelconque des revendications 1 à 3, **caractérisé en ce que** la zone d'extension radiale (11) est conçue comme un rebord (12) entourant le montant (7).

5. Implant (1) selon la revendication 4, **caractérisé en ce que** le rebord (12) est reçu dans un plan à travers lequel un axe central du montant (7) s'étend perpendiculairement.

6. Implant (1) selon l'une quelconque des revendications 1 à 5, **caractérisé en ce que** plusieurs montants (7) font saillie de la structure de support (5), dans lequel les zones d'extension radiale (11) des plusieurs montants (7) sont disposées dans un plan commun.

7. Système d'élimination de tissus mous (19) avec un implant (1) selon l'une quelconque des revendications 1-6, qui comporte une structure de support (5) qui est préparée pour l'ancrage suivant le contour osseux sur un os de la mâchoire et/ou du crâne (2), dans lequel plusieurs montants (7) dépassent de la structure de support (5), qui sont conçus pour y ancrer une prothèse dentaire finale, **caractérisé en ce que** le système d'élimination de tissus mous (19) présente un serre-flan (8) pouvant être ancré sur les montants (7), qui est sensiblement conçu en forme de plaque, et le serre-flan (8) comporte, sur une face inférieure tournée vers les montants (7), au moins un évidement (24) pour recevoir la zone d'extrémité distale (10) des montants (7) et est ancré aux montants (7), dans lequel la zone d'extrémité distale (10) du montant respectif (7) comporte un méplat antirotation disposé dans un plan pour empêcher une rotation relative entre la structure de support (5) et le serre-flan (8) ancré au montant (7), et les plusieurs plans sont orientés parallèlement entre eux.

8. Système d'élimination de tissus mous (19) selon la revendication 7, **caractérisé en ce que** le serre-flan (8) est adapté visuellement et fonctionnellement aux dents et aux tissus mous adjacents à celui-ci.

9. Procédé de fabrication d'un système d'élimination de tissus mous (19) selon la revendication 7 ou 8, dans lequel, dans une étape préparatoire, des informations sur la forme d'arcade dentaire individuelle, saisies par des appareils de mesure standard, sont utilisées pour sélectionner un certain serre-flan parmi une quantité de serre-flans standard préconfectionnés, dans lequel une adaptation de l'extension totale est ensuite effectuée en fonction de conditions spécifiques au patient.

10. Procédé de planification pour la fabrication d'un implant (1) selon la revendication 1 avec un serre-flan (8) pour un système d'élimination de tissus mous (19) selon la revendication 7 ou 8, dans lequel une structure de support individuelle (5) de l'implant (1) est planifiée et l'implant (1) est doté de parties de couronne dentaire standard pour la formation d'un serre-flan (8) pour tissus mous, dans lequel les montants (7) prévus pour recevoir le serre-flan (8) sont conçus pour recevoir une prothèse dentaire individuelle après retrait du serre-flan (7).
